# EUROPEAN PATENT APPLICATION

(11) **EP 4 207 476 A1**
(43) Date of publication of application: **05.07.2023**
(21) Application number: 20955809.7
(22) Date of filing: 30.09.2020
(51) Int. Cl.: H01M 50/528, H01M 10/058

(54) **BATTERY CELL AND FEEDTHROUGH ASSEMBLY**

(71) Applicant: Ningde Amperex Technology Limited, Ningde, Fujian 352100 (CN)
(72) Inventor: HE, Xin, Ningde, Fujian 352100 (CN)
(74) Representative: Klunker IP Patentanwälte PartG mbB
(86) International application number: PCT/CN2020/119703
(87) International publication number: WO 2022/067786

(57) **Abstract**

This application relates to the battery field, and discloses a battery unit and a feedthrough assembly. The battery unit includes a housing assembly, an electrode assembly, a conductive plate, and a feedthrough assembly. The feedthrough assembly includes a first washer, a second washer, a conductive terminal, and a rivet. The housing assembly is provided with an opening for accommodating the feedthrough assembly. The first washer and the second washer are respectively disposed on an outer surface and an inner surface of the housing assembly. The conductive terminal is disposed on a side of the second washer facing away from the first washer. The rivet passes through the first washer, the opening, the second washer, and the conductive terminal, is electrically connected to the conductive terminal, and compresses the first washer and the second washer to seal the opening. In the battery unit, the feedthrough assembly is not fastened onto the housing assembly through thermal processing processes such as welding, but the first washer, the second washer, the conductive terminal, and the rivet are mounted to the housing assembly through clamping force applied by the rivet to the first washer, the second washer, and the conductive terminal after the rivet is riveted and deformed and interaction force of the housing assembly. This can effectively avoid a great change on local stress of a part of the housing assembly corresponding to the feedthrough assembly.

## Description

### TECHNICAL FIELD

This application relates to the field of battery technologies, and in particular, to a battery unit and a feedthrough assembly.

### BACKGROUND

A battery unit is an apparatus that converts external energy into electric energy and stores the electric energy inside to supply power to an external device (for example, a portable electronic device) as required. Generally, the battery unit includes a housing assembly and an electrode assembly disposed in the housing assembly, where the electrode assembly generally includes a positive electrode plate and a negative electrode plate that are circularly and alternately arranged, and a separator disposed therebetween for separating the two. Generally, the housing assembly is a conductor. One of the positive electrode plate and the negative electrode plate is electrically connected to the housing assembly via a conductive element, and the other needs to be indirectly electrically connected to a feedthrough assembly passing through the housing assembly via a conductive plate, and remains insulated from the housing assembly to avoid short circuits of the battery unit.

In the prior art, the feedthrough assembly is fastened to the housing assembly by welding, but a thermal effect caused by welding leads to a great change on the local stress of a part of the housing assembly corresponding to the feedthrough assembly, thereby deteriorating the sealing performance of the battery unit.

### SUMMARY

This application is intended to provide a battery unit and a feedthrough assembly, so as to resolve the technical issue of an existing battery unit that local stress of a part of a housing assembly corresponding to the feedthrough assembly is greatly changed due to a thermal effect caused by welding the feedthrough assembly to the housing assembly.

The following technical solution is adopted for this application to resolve the technical issue:
A battery unit includes a housing assembly, an electrode assembly, a conductive plate electrically connected to the electrode assembly, and a feedthrough assembly. The housing assembly accommodates the electrode assembly and the conductive plate, and the housing assembly is provided with an opening for mounting the feedthrough assembly.

The feedthrough assembly includes a first washer, a second washer, a conductive terminal, a rivet, and an insulation sleeve. The first washer is disposed on an outer surface of the housing assembly, and a second washer is disposed on an inner surface of the housing assembly and is disposed opposite to the first washer. The conductive terminal is accommodated in the housing assembly and is disposed on a side of the second washer facing away from the first washer. The rivet includes a shaft portion, an end portion, and a limiting portion, where the shaft portion sequentially passes through the first washer, the opening, the second washer, and the conductive terminal, the end portion is disposed at an end of the shaft portion extending out of the housing assembly, the limiting portion is accommodated in the housing assembly and is electrically connected to the conductive terminal, and the end portion and the limiting portion abut against the first washer and the second washer so as to seal the opening. The insulation sleeve fits around an outer wall of the shaft portion, so as to prevent contact between the shaft portion and the housing assembly. The conductive plate is electrically connected to the conductive terminal.

The first washer includes a washer body and an annular protrusion, the washer body is provided with a through hole for the rivet to pass through, and the annular protrusion is disposed on an end surface of the washer body and surrounds an end portion of the through hole.

In a further improvement solution of the foregoing technical solution, two end surfaces of the washer body are each provided with the annular protrusion.

In a further improvement solution of the foregoing technical solution, the limiting portion is formed through compression and deformation of the rivet during riveting.

In a further improvement solution of the foregoing technical solution, a side wall of the second washer is at least partially attached to the inner surface of the housing assembly, so as to prevent the second washer from rotating around the rivet relative to the housing assembly.

In a further improvement solution of the foregoing technical solution, the second washer is fastened to the housing assembly.

In a further improvement solution of the foregoing technical solution, the second washer is provided with an accommodation groove for accommodating at least part of the conductive terminal. A side wall of the conductive terminal and a groove wall of the accommodation groove are at least partially attached to each other, so as to prevent the conductive terminal from rotating relative to the second washer.

In a further improvement solution of the foregoing technical solution, the side wall of the conductive terminal includes two first side wall units disposed opposite to each other, the groove wall of the accommodation groove includes two second side wall units disposed opposite to each other, and one of the first side wall units is correspondingly attached to one of the second side wall units.

In a further improvement solution of the foregoing technical solution, the conductive terminal is provided with an accommodating groove for accommodating the limiting portion.

In a further improvement solution of the foregoing technical solution, a side wall of the limiting portion and a side wall of the accommodating groove are at least partially attached to each other, so as to prevent the rivet from rotating relative to the conductive terminal.

In a further improvement solution of the foregoing technical solution, the battery unit further includes an insulation partition, and the insulation partition is disposed between the limiting portion and the electrode assembly. The insulation partition is provided with a through groove, and the conductive plate passes through the through groove and is electrically connected to the rivet.

The following technical solution is further adopted for this application to resolve the technical issue:
A feedthrough assembly includes a first washer, a second washer, a conductive terminal, a rivet, and an insulation sleeve. The first washer is disposed opposite to the second washer. The conductive terminal is disposed on a side of the second washer facing away from the first washer. The rivet includes a shaft portion and an end portion, where the shaft portion sequentially passes through the first washer, the second washer, and the conductive terminal, the end portion is disposed at a first end of the shaft portion, a second end of the shaft portion is compressed during riveting to form a limiting portion, so that one of the end portion and the limiting portion is connected to the conductive terminal, and the end portion and the limiting portion abut against the first washer and the second washer. The insulation sleeve fits around the shaft portion.

The first washer includes a washer body and an annular protrusion, where the washer body is provided with a through hole for the rivet to pass through, and the annular protrusion is disposed on an end surface of the washer body and surrounds an end portion of the through hole.

In a further improvement solution of the foregoing technical solution, two end surfaces of the washer body are each provided with the annular protrusion.

In a further improvement solution of the foregoing technical solution, the end portion is disposed on a side of the first washer facing away from the second washer.

In a further improvement solution of the foregoing technical solution, the second washer is provided with an accommodation groove for accommodating at least part of the conductive terminal. A side wall of the conductive terminal and a groove wall of the accommodation groove are at least partially attached to each other, so as to prevent the conductive terminal from rotating relative to the second washer.

In a further improvement solution of the foregoing technical solution, the side wall of the conductive terminal includes two first side wall units disposed opposite to each other, the groove wall of the accommodation groove includes two second side wall units disposed opposite to each other, and one of the first side wall units is correspondingly attached to one of the second side wall units.

In a further improvement solution of the foregoing technical solution, the conductive terminal is provided with a via hole for the shaft portion to pass through, and a side of the conductive terminal facing away from the second washer is provided with an accommodating groove in communication with the via hole.

This application has the following beneficial effects:
The battery unit provided in the embodiments of this application includes the housing assembly, the electrode assembly, the conductive plate, and the feedthrough assembly. The feedthrough assembly includes the first washer, the second washer, the conductive terminal, and the rivet. The housing assembly is provided with the opening for mounting the feedthrough assembly, the first washer is disposed on the outer surface of the housing assembly, and the second washer is disposed on the inner surface of the housing assembly. The conductive terminal is accommodated in the housing assembly and is disposed on the side of the second washer facing away from the first washer. The rivet sequentially passes through the first washer, the opening, the second washer, and the conductive terminal, and is electrically connected to the conductive terminal, and the rivet further abuts against the first washer and the second washer to seal the foregoing opening. A positive electrode plate or negative electrode plate in the electrode assembly is electrically connected to the conductive terminal via the conductive plate, so as to make the rivet be an external terminal of the battery unit.

In the battery unit provided in the embodiments of this application, the feedthrough assembly is not fastened onto the housing assembly through thermal processing processes such as welding, but the first washer, the second washer, the conductive terminal, and the rivet are mounted to the housing assembly through clamping force applied by the rivet to the first washer, the second washer, and the conductive terminal after the rivet is riveted and deformed and interaction force generated by the housing assembly. This can effectively avoid a great change on the local stress of a part of the housing assembly corresponding to the feedthrough assembly caused by a thermal effect, meaning that the sealing performance of the battery unit can be improved to some extent.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and persons of ordinary skill in the art may still derive other drawings from structures illustrated in these accompanying drawings without creative efforts.
FIG. 1 is a schematic exploded view of a battery unit according to an embodiment of this application;
FIG. 2 is a partial view of a rotary cross-sectional schematic diagram of the battery unit in FIG. 1;
FIG. 3 is a stereoscopic schematic diagram of a first washer in FIG. 1;
FIG. 4 is a schematic cross-sectional diagram of the first washer in a direction in FIG. 1;
FIG. 5 is a stereoscopic schematic diagram of a second washer in FIG. 1;
FIG. 6 is a stereoscopic schematic diagram of a conductive terminal in FIG. 1;
FIG. 7 is a stereoscopic schematic diagram of a rivet in FIG. 1; and
FIG. 8 is a schematic exploded view of a feedthrough assembly according to an embodiment of this application.

### DESCRIPTION OF EMBODIMENTS

For ease of understanding this application, the following further describes this application in detail with reference to the accompanying drawings and specific embodiments. It should be noted that when a component is referred to as being "fastened to" or "fixedly connected to" another component, it may be directly fixed to the another component, or there may be one or more components in between. When a component is deemed as being "connected to" another component, it may be directly connected to the another component, or there may be one or more components in between. The terms "vertical", "horizontal", "left", "right", "inside", "outside", and similar expressions used in this specification are merely for description purposes.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

In this specification, "mounting" includes fastening or limiting an element or apparatus to a specific location or place by means of welding, screwing, clamping, bonding, or the like. The element or apparatus may stay still at the specific position or place, or may move within a limited range. After being fastened or limited to the specific position or place, the element or apparatus can be disassembled or cannot be disassembled. This is not limited in the embodiments of this application.

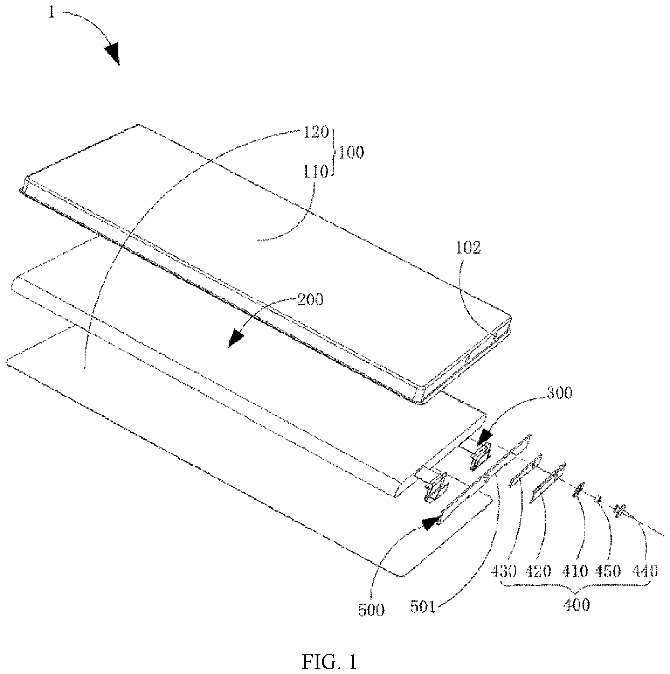

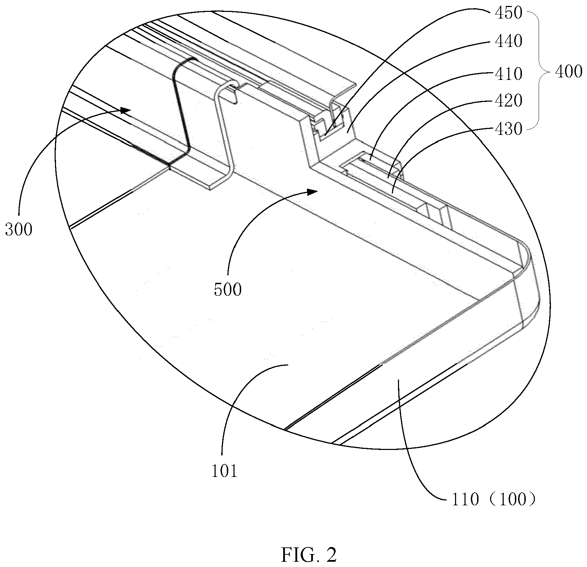

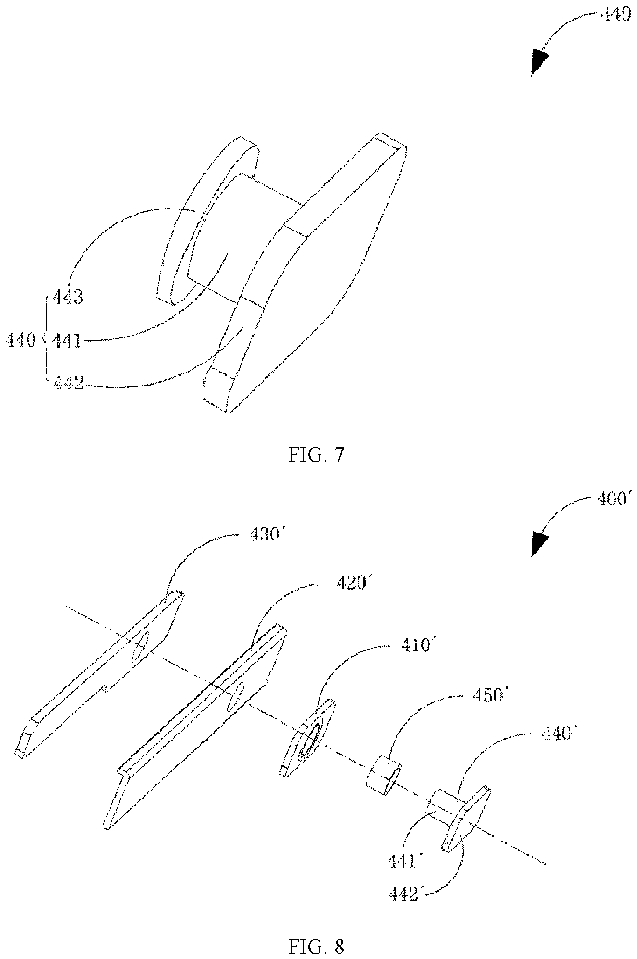

Referring to FIG. 1 and FIG. 2, FIG. 1 and FIG. 2 respectively show a schematic exploded view of a battery unit 1 according to an embodiment of this application, and a partial view of a rotary cross-sectional schematic diagram of the battery unit 1. The battery unit 1 includes a housing assembly 100, an electrode assembly 200, a conductive plate 300, and a feedthrough assembly 400. The housing assembly 100 is provided with an accommodating cavity 101 for accommodating the electrode assembly 200 and the conductive plate 300 inside, and the housing assembly 100 is further provided with an opening 102 in communication with the accommodating cavity 101 and configured for mounting the feedthrough assembly 400. The feedthrough assembly 400 includes a first washer 410, a second washer 420, a conductive terminal 430, a rivet 440, and an insulation sleeve 450. The first washer 410 is disposed on an outer surface of the housing assembly 100, and a second washer 420 is disposed on an inner surface of the housing assembly 100 and is disposed opposite to the first washer 410. The conductive terminal 430 is accommodated in the accommodating cavity 101 of the housing assembly 100 and is disposed on a side of the second washer 420 facing away from the first washer 410. Referring to FIG. 7, the rivet 440 includes a shaft portion 441, an end portion 442, and a limiting portion 443, where the shaft portion 441 sequentially passes through the first washer 410, the opening 102, the second washer 420, and the conductive terminal 430, the end portion 442 is disposed at an end of the shaft portion 441 extending out of the housing assembly 100, and the limiting portion 443 is provided at an end of the shaft portion 441 that is accommodated in the housing assembly 100 and is electrically connected to the conductive terminal 430. The end portion 442 and the limiting portion 443 abut against the first washer 410 and the second washer 420 so as to seal the opening 102. The insulation sleeve 450 fits around an outer wall of the shaft portion 441, so as to prevent contact between the shaft portion 441 and the housing assembly 100.

For the housing assembly 100, specifically referring to FIG. 1, according to an embodiment of this application, the housing assembly 100 is of a flat rectangular shape as a whole and includes a housing 110 and a cover 120. The housing 110 is a boxshaped structure with an open end as a whole, the cover 120 covers and is fastened to the open end of the housing 110, and the housing 110 and the cover 120 together enclose the accommodating cavity 101. In addition, the housing 110 is further provided with the opening 102 for accommodating the feedthrough assembly 400, and the opening 102 is in communication with the accommodating cavity 101. According to another embodiment of this application, the housing assembly 100 may be of a non-flat rectangular shape or a cylindrical shape, or may be another three-dimensional structure composed of a bottom, a wall, and a cover.

For the electrode assembly 200, still referring to FIG. 1, the electrode assembly 200 is accommodated in the accommodating cavity 101 of the housing assembly 100 and includes a positive electrode plate and a negative electrode plate that are alternately arranged, and a separator disposed therebetween for separating the two. The electrode assembly 200 is of an approximately rectangular shape, so as to be accommodated in the accommodating cavity 101. The electrode assembly 200 is a core component for charging and discharging the battery unit 1. One of the positive electrode plate and the negative electrode plate is electrically connected to the housing assembly 100 via a conductive element not shown here, and the other is electrically connected to the feedthrough assembly 400 via the conductive plate 300, so as to make the feedthrough assembly 400 be an external terminal of the battery unit 1. The housing assembly 100 is further filled with an electrolyte, the electrode assembly 200 is soaked in the electrolyte, and the electrolyte is configured to provide an environment for lithium ion conduction, so that lithium ions can intercalate into the positive electrode plate or the negative electrode plate, thereby implementing a charge and discharge process of the battery unit 1.

For the feedthrough assembly 400, referring to FIG. 1, the feedthrough assembly 400 specifically includes the first washer 410, the second washer 420, the conductive terminal 430, the rivet 440, and the insulation sleeve 450, and specific structures of the foregoing components are described below in detail.

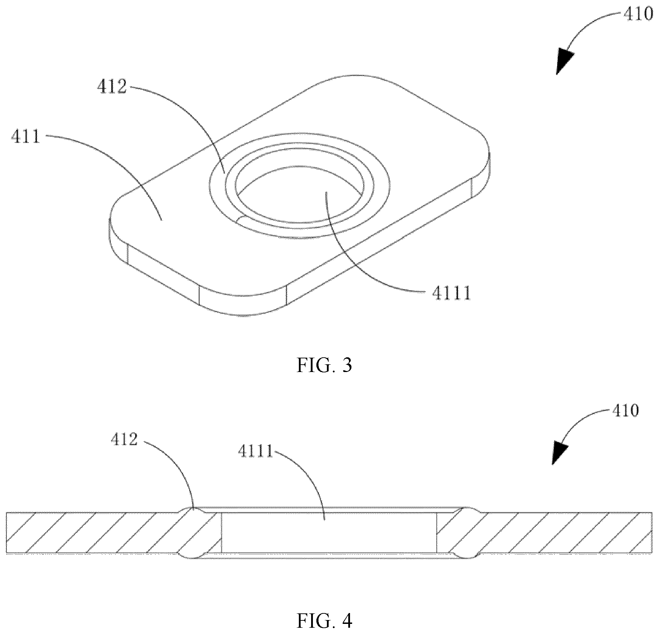

For the foregoing first washer 410 and the second washer 420, referring to FIG. 3 to FIG. 5, FIG. 3 to FIG. 5 respectively show a stereoscopic schematic diagram of the first washer 410, a schematic cross-sectional diagram of the first washer 410, and a stereoscopic schematic diagram of the second washer 420. In addition, as combined with other accompanying drawings, both the first washer 410 and the second washer 420 are insulators and have good elasticity. The first washer 410 is a plate structure as a whole, is disposed on the outer surface of the housing assembly 100, and is disposed corresponding to the opening 102; and the first washer 410 is provided with a through hole 4111 in communication with the opening 102 for the rivet 440 to pass through. The second washer 420 is also a plate structure as a whole, is closely attached to the inner surface of the housing assembly 100, and is disposed opposite to the first washer 410. The second washer 420 is provided with a via hole 421 in communication with the opening 102 for the rivet 440 to pass through.

Preferably, to prevent the second washer 420 from rotating around the rivet 440 relative to the housing assembly 100 and further interfering with other elements in the housing assembly 100 or causing other accidents, the second washer 420 is fastened relative to a circumference of the opening 102, meaning that the second washer 420 does not rotate around the rivet 440. In this embodiment, a side wall of the second washer 420 is at least partially attached to the inner surface of the housing assembly 100 so as to prevent the second washer 420 from rotating around the rivet 440 relative to the housing assembly 100. Specifically, the side wall of the second washer 420 includes two positioning wall surfaces 422 disposed opposite to each other, one of the positioning wall surfaces 422 is in contact with an inner surface of the cover 120, and the other is in contact with an inner surface of the housing 110, so that the second washer 420 is fastened relative to the circumference the opening 102 and cannot rotate. In addition, under compression action of the rivet 440, the second washer 420 is fastened in an axial direction of the rivet 440 relative to the housing assembly 100, meaning that the second washer 420 is fastened relative to the housing assembly 100. It can be understood that in another embodiment of this application, the second washer 420 may further be directly fastened to the housing assembly 100 by means of bonding, screwing, or the like, so as to achieve the foregoing objective.

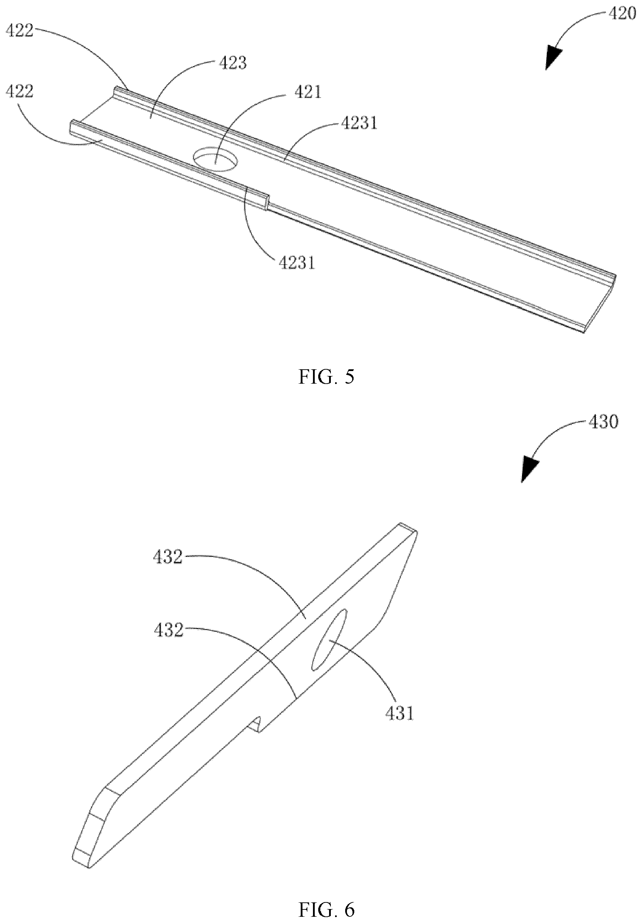

For the foregoing conductive terminal 430, referring to FIG. 6, FIG. 6 is a stereoscopic schematic diagram of the conductive terminal 430 in a direction, and as combined with other accompanying drawings, the side of the second washer 420 facing away from the first washer 410 is provided with an accommodation groove 423, and the conductive terminal 430 is partially accommodated in the accommodation groove 423 and is electrically connected to an end of the conductive plate 300 farther away from the electrode assembly 200. The conductive terminal 430 is a flat plate structure as a whole and is provided with a via hole 431 for the rivet 440 to pass through. The provision of the accommodation groove 423 can avoid excessive space occupied by the conductive terminal 430 being exposed outside the second washer 420, and can also avoid contact between a side surface of the conductive terminal 430 and the housing assembly 100 caused by the conductive terminal 430 rotating accidentally around the rivet 440 relative to the housing assembly 100 to some extent, so as to reduce a safety hazard of electric contact between the conductive terminal 430 and the housing assembly 100.

Further, to prevent the conductive terminal 430 from causing interference to other components in the housing assembly 100, such as the conductive plate 300 caused by the conductive terminal 430 rotating in the housing assembly 100, a side wall of the conductive terminal 430 and a side wall of the accommodation groove 423 are at least partially attached to each other, so as to prevent the conductive terminal 430 from rotating relative to the second washer 420. Specifically, referring to FIG. 5 and FIG. 6, the side wall of the conductive terminal 430 includes two first side wall units 432 disposed opposite to each other; the accommodation groove 423 extends in a length direction of the second washer 420, where two ends of the accommodation groove 423 respectively pass through the second washer 420; and the groove wall of the accommodation groove 423 includes two second side wall units 4231 disposed opposite to each other, and one of the first side wall units 432 is correspondingly attached to one of the second side wall units 4231. The conductive terminal 430 is fastened relative to a circumference of the rivet 440, and cannot rotate relative to the second washer 420 and the housing assembly 100. In addition, the conductive terminal 430 is fastened in an axial direction of the rivet 440 under the action of the rivet 440, meaning that the conductive terminal 430 is fastened relative to the housing assembly 100. It can be understood that in another embodiment of this application, a shape of the conductive terminal 430 and a shape of the accommodation groove 423 may also be other shapes, provided that in a case that the conductive terminal 430 is accommodated or at least partially accommodated in the accommodation groove 423, the side wall of the conductive terminal 430 and the groove wall of the accommodation groove 423 are at least partially attached to each other, and the conductive terminal 430 does not rotate relative to the second washer 420. For example, in some embodiments, a cross-sectional contour of the groove wall of the accommodation groove 423 is a closed polygon, the shape of the conductive terminal 430 fits with that of the accommodation groove 423, and the side wall of the conductive terminal 430 is entirely attached to the groove wall of the accommodation groove 423.

For the foregoing rivet 440, referring to FIG. 7, FIG. 7 is a stereoscopic schematic diagram of the rivet 440, where the rivet 440 is of an H-shape as a whole and includes the shaft portion 441, the end portion 442, and the limiting portion 443. The shaft portion 441 is a columnar mechanism and sequentially passes through the first washer 410, the opening 102, the second washer 420, and the conductive terminal 430, and the insulation sleeve 450 fits around the outer wall of the shaft portion 441, so as to prevent contact between the shaft portion 441 and the housing assembly 100. The end portion 442 is formed by extending outward from one end of the shaft portion 441 that extends out of the housing assembly 100 and is a flat plate structure as a whole, where a cross-sectional contour of the end portion 442 is larger than a cross-sectional contour of the shaft portion 441. The limiting portion 443 is formed by an end of the shaft portion 441 that is accommodated in the housing assembly 100 and extends outward, with a cross-sectional contour slightly larger than the cross-sectional contour of the shaft portion 441. The first washer 410, the second washer 420, and the conductive terminal 430 are all located between the end portion 442 and the limiting portion 443, where the end portion 442 abuts against the first washer 410, the limiting portion 443 abuts against and is electrically connected to the conductive terminal 430, and the end portion 442 cooperates with the limiting portion 443 to abut against the first washer 410 and the second washer 420 to seal the opening 102. Preferably, an end of the conductive terminal 430 facing the limiting portion 443 is provided with an accommodating groove (not shown in the figure) that is in communication with the via hole 431 and is configured to accommodate the limiting portion 443, so as to prevent the limiting portion 443 from protruding out of the conductive terminal 430, or reduce height of the limiting portion 443 protruding from the conductive terminal 430. Preferably, the side wall of the limiting portion 443 and a side wall of the accommodating groove are at least partially attached to each other, so as to prevent the rivet 440 from rotating relative to the conductive terminal 430. For example, in some embodiments, the side wall of the limiting portion 443 includes two first limiting wall surfaces disposed opposite to each other, and correspondingly, a groove wall of the accommodating groove includes two second limiting wall surfaces disposed opposite to each other, and one of the first limiting wall surfaces is correspondingly attached to one of the second limiting wall surfaces. It is worth mentioning that in this embodiment, the limiting portion 443 is formed through compression and deformation of the rivet 440 during riveting, and a shape of the accommodating groove may guide a shape of the limiting portion 443 that is formed by deformation; and before riveting, a shape of the limiting portion 443 is the same as that of the shaft portion 441, both of which are columnar structures.

Further, to improve a sealing effect when the rivet 440 abuts against the first washer 410, in this embodiment, the first washer 410 includes a washer body 411 and an annular protrusion 412. Specifically, still referring to FIG. 3 and FIG. 4, as combined with other accompanying drawings, the washer body 411 is a flat plate structure as a whole, is disposed corresponding to the opening 102, and is provided with the through hole 4111. The annular protrusion 412 is a closed annulation and is disposed on an end surface of the washer body 411. According to an embodiment of this application, the annular protrusion 412 may be annularly disposed at an edge of an end portion of the through hole 4111; according to another embodiment of this application, the annular protrusion 412 may be annularly disposed at any middle position of an end surface of the washer body 411; and according to still another embodiment of this application, the annular protrusion 412 may be an irregular annulation and is disposed on the end surface of the washer body 411 in a closed-annulation manner. The annular protrusion 312 protrudes out of the end surface of the washer body 411, so that the squeezing force applied on the annular protrusion 412 is greater than that of other positions of the end surface of the washer body 411 when the rivet 440 abuts against the first washer 410, and a better sealing effect thereof is implemented with respect to the other positions of the end surface. Optionally, two end surfaces of the washer body 411 are each provided with the annular protrusion 412. It should be noted that the "end surface" in this paragraph refers to a surface of the washer body 411 that is perpendicular to an extension direction of the shaft portion 441 of the rivet, which may refer to a surface of a side of the washer body 411 facing the housing assembly 100, or may refer to a surface of a side of the washer body 411 facing away from the housing assembly 100.

Further, to avoid a short circuit of the battery unit 1 caused by physical contact between an electrode plate of the electrode assembly 200 that is electrically connected to the housing assembly 100 and the rivet 440, the battery unit 1 further includes an insulation partition 500. Specifically, referring to FIG. 1 and FIG. 2, the insulation partition 500 is accommodated in the housing assembly 100 and is disposed between the limiting portion 443 of the rivet 440 and the electrode assembly 200 for separating the rivet 440 and the electrode assembly 200. The insulation partition 500 is provided with a through groove 501, and the through groove 501 runs through the insulation partition 500 in the direction of the electrode assembly 200 toward the rivet 440. One end of the foregoing conductive plate 300 is electrically connected to an electrode plate of the electrode assembly 200, and another end thereof passes through the through groove 501 and is electrically connected to the rivet 440.

The battery unit 1 provided in some embodiments of this application includes the housing assembly 100, the electrode assembly 200, the conductive plate 300, and the feedthrough assembly 400. The feedthrough assembly 400 includes the first washer 410, the second washer 420, the conductive terminal 430, the rivet 440, and the insulation sleeve 450. The first washer 410 is disposed on the outer surface of the housing assembly 100, and the second washer 420 is disposed on the inner surface of the housing assembly 100 and is disposed opposite to the first washer 410. The conductive terminal 430 is accommodated in the accommodating cavity 101 of the housing assembly 100 and is disposed on the side of the second washer 420 facing away from the first washer 410. The shaft portion 441 of the rivet 440 sequentially passes through the first washer 410, the opening 102, the second washer 420, and the conductive terminal 430, the end portion 442 of the rivet 440 is disposed at the end of the shaft portion 441 extending out of the housing assembly 100, and the limiting portion 443 of the rivet 440 is provided at the end of the shaft portion that is accommodated in the housing assembly 100 and is electrically connected to the conductive terminal 430. The end portion 442 and the limiting portion 443 abut against the first washer 410 and the second washer 420 so as to seal the opening 102. The insulation sleeve 450 fits around the outer wall of the shaft portion 441, so as to prevent contact between the shaft portion 441 and the housing assembly 100. In addition, one of the positive electrode plate or the negative electrode plate in the electrode assembly 200 is electrically connected to the conductive terminal 430 via the conductive plate 300, so as to make the rivet 440 be an external terminal of the battery unit 1.

As compared with a battery unit in the existing market, in the battery unit 1 provided in some embodiments of this application, the feedthrough assembly 400 is not fastened onto the housing assembly 100 through thermal processing processes such as welding, but the first washer 410, the second washer 420, the conductive terminal 430, and the rivet 440 are mounted to the housing assembly 100 through clamping force applied by the rivet 440 to the first washer 410, the second washer 420, and the conductive terminal 430 after the rivet 440 is riveted and deformed and interaction force generated by the housing assembly 100. This can effectively avoid a great change on the local stress of a part of the housing assembly 100 corresponding to the feedthrough assembly 400 caused by a thermal effect, meaning that the sealing performance of the battery unit 1 can be improved to some extent.

Based on the same inventive concept, this application further provides a feedthrough assembly 400'. Referring to FIG. 8, FIG. 8 is a schematic exploded view of the feedthrough assembly 400'. Referring to FIG. 1 to FIG. 7, the feedthrough assembly 400' and the feedthrough assembly 400 in the foregoing embodiment have a same structure. For ease of description, the feedthrough assembly 400 in the foregoing embodiment is referred to as a first feedthrough assembly 400, and the feedthrough assembly 400' in this embodiment is referred to as a second feedthrough assembly 400' as below.

Specifically, the second feedthrough assembly 400' includes a first washer 410', a second washer 420', a conductive terminal 430, a rivet 440', and an insulation sleeve 450'. The first washer 410', the second washer 420', the conductive terminal 430', and the insulation sleeve 450' respectively have a corresponding same shape, structure, and positional relationship as the first washer 410, the second washer 420, the conductive terminal 430, and the insulation sleeve 450 in the first feedthrough assembly 400. For details, reference may be made to some foregoing embodiments. The first washer 410', the second washer 420', the conductive terminal 430', and the insulation sleeve 450' in this embodiment are not described herein again. A main difference between the second feedthrough assembly 400' and the first feedthrough assembly 400 lies in the rivet 440', specifically as follows:

The rivet 440 in the first feedthrough assembly 400 includes the shaft portion 441, the end portion 442, and the limiting portion 443.

The rivet 440' in the second feedthrough assembly 400' includes a shaft portion 441' and an end portion 442', and the shaft portion 441' sequentially passes through the first washer 410', the second washer 420', and the conductive terminal 430'. The end portion 442' is disposed at a first end of the shaft portion 441' and is formed by the first end of the shaft portion 441' extending outward. A second end of the shaft portion 441' is compressed during riveting to form a limiting portion (with reference to the limiting portion 443 in the first feedthrough assembly), so that one of the end portion 442' and such limiting portion is connected to the conductive terminal 430', and the end portion 442' and the limiting portion abut against the first washer 410' and the second washer 420'. In this embodiment, the end portion 442' is fastened to an end of the shaft portion 441' that is closer to the first washer 410', that is, a side of the first washer 410' facing away from the second washer 420'. Certainly, in another embodiment of this application, the end portion 442' may alternatively be fastened to an end of the shaft portion 441' farther away from the first washer 410'.

The second feedthrough assembly 400' may be applied to the battery unit and has a fastening manner substantially the same as that of the first feedthrough assembly 400. The second feedthrough assembly 400' can be fastened to the housing assembly through riveting of the rivet 440' rather than thermal processing processes such as welding, so that the second feedthrough assembly 400' can effectively avoid a great change on the local stress of a part of the housing assembly corresponding to the feedthrough assembly caused by a thermal effect.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

## Claims

1. A battery unit, comprising a housing assembly, an electrode assembly, a conductive plate electrically connected to the electrode assembly, and a feedthrough assembly;
wherein the housing assembly accommodates the electrode assembly and the conductive plate, and the housing assembly is provided with an opening for mounting the feedthrough assembly;
the feedthrough assembly comprises a first washer, a second washer, a conductive terminal, a rivet and an insulation sleeve;
the first washer is disposed on an outer surface of the housing assembly;
the second washer is disposed on an inner surface of the housing assembly and is disposed opposite to the first washer;
the conductive terminal is accommodated in the housing assembly and disposed on a side of the second washer facing away from the first washer;
the rivet comprising a shaft portion, an end portion, and a limiting portion; wherein the shaft portion sequentially passes through the first washer, the opening, the second washer, and the conductive terminal; the end portion is disposed at an end of the shaft portion extending out of the housing assembly, the limiting portion is accommodated in the housing assembly and is electrically connected to the conductive terminal, and the end portion and the limiting portion abut against the first washer and the second washer so as to seal the opening; and
the insulation sleeve fits around an outer wall of the shaft portion, so as to prevent contact between the shaft portion and the housing assembly; and
the conductive plate is electrically connected to the conductive terminal,
wherein the first washer comprises a washer body and an annular protrusion, the washer body is provided with a through hole for the rivet to pass through, and the annular protrusion is disposed on an end surface of the washer body and surrounds an end portion of the through hole.

2. The battery unit according to claim 1, wherein two end surfaces of the washer body are each provided with the annular protrusion.

3. The battery unit according to claim 1, wherein the limiting portion is formed through compression and deformation of the rivet during riveting.

4. The battery unit according to claim 1, wherein a side wall of the second washer is at least partially attached to the inner surface of the housing assembly, so as to prevent the second washer from rotating around the rivet relative to the housing assembly.

5. The battery unit according to claim 1, wherein the second washer is fastened to the housing assembly.

6. The battery unit according to claim 1, wherein the second washer is provided with an accommodation groove for accommodating at least part of the conductive terminal; and
a side wall of the conductive terminal and a groove wall of the accommodation groove are at least partially attached to each other, so as to prevent the conductive terminal from rotating relative to the second washer.

7. The battery unit according to claim 6, wherein the side wall of the conductive terminal comprises two first side wall units disposed opposite to each other, the groove wall of the accommodation groove comprises two second side wall units disposed opposite to each other, and one of the first side wall units is correspondingly attached to one of the second side wall units.

8. The battery unit according to claim 1, wherein the conductive terminal is provided with an accommodating groove for accommodating the limiting portion.

9. The battery unit according to claim 8, wherein a side wall of the limiting portion and a side wall of the accommodating groove are at least partially attached to each other, so as to prevent the rivet from rotating relative to the conductive terminal.

10. The battery unit according to claim 1, further comprising an insulation partition, wherein the insulation partition is disposed between the limiting portion and the electrode assembly; and
the insulation partition is provided with a through groove, and the conductive plate passes through the through groove and is electrically connected to the rivet.

11. A feedthrough assembly, comprising a first washer, a second washer, a conductive terminal, a rivet and an insulation sleeve;
the second washer is disposed opposite to the first washer;
the conductive terminal is disposed on a side of the second washer facing away from the first washer;
the rivet is comprising a shaft portion and an end portion, wherein the shaft portion sequentially passes through the first washer, the second washer, and the conductive terminal, the end portion is disposed at a first end of the shaft portion, a second end of the shaft portion is compressed during riveting to form a limiting portion, so that one of the end portion and the limiting portion is connected to the conductive terminal, and the end portion and the limiting portion abut against the first washer and the second washer;
the insulation sleeve fits around the shaft portion;
wherein the first washer comprises a washer body and an annular protrusion, the washer body is provided with a through hole for the rivet to pass through, and the annular protrusion is disposed on an end surface of the washer body and surrounds an end portion of the through hole.

12. The feedthrough assembly according to claim 11, wherein two end surfaces of the washer body are each provided with the annular protrusion.

13. The feedthrough assembly according to claim 11, wherein the end portion is disposed on a side of the first washer away from the second washer.

14. The feedthrough assembly according to claim 11, wherein the second washer is provided with an accommodation groove for accommodating at least part of the conductive terminal; and
a side wall of the conductive terminal and a groove wall of the accommodation groove are at least partially attached to each other, so as to prevent the conductive terminal from rotating relative to the second washer.

15. The feedthrough assembly according to claim 14, wherein the side wall of the conductive terminal comprises two first side wall units disposed opposite to each other, the groove wall of the accommodation groove comprises two second side wall units disposed opposite to each other, and one of the first side wall units is correspondingly attached to one of the second side wall units.

16. The feedthrough assembly according to claim 13, wherein the conductive terminal is provided with a via hole for the shaft portion to pass through, and a side of the conductive terminal facing away from the second washer is provided with an accommodating groove in communication with the via hole.
